# EUROPÄISCHE PATENTSCHRIFT

(11) **EP 3 922 804 B1**
(45) Veröffentlichungstag und Bekanntmachung des Hinweises auf die Patenterteilung: **08.11.2023**
(21) Anmeldenummer: 21166155.8
(22) Anmeldetag: 31.03.2021
(51) Int. Cl.: E06B 3/968, E06B 5/00

(54) **MÖBELTEIL**
FURNITURE PART
PARTIE DE MEUBLE

(30) Priorität: 09.04.2020 DE 202020102002 U; 05.05.2020 DE 202020102524 U; 07.10.2020 DE 102020126308
(43) Veröffentlichungstag der Anmeldung: 15.12.2021
(73) Patentinhaber: Westermann KG, 59759 Arnsberg (DE)
(72) Erfinder: Neuhaus, Hendrik, 59759 Arnsberg (DE)
(74) Vertreter: Müller, Enno

(56) Entgegenhaltungen:
- IT-A1- UD20 130 048
- US-A- 2 221 005
- US-A- 2 816 632
- US-A1- 2020 032 578

## Beschreibung

### Gebiet der Technik

Die Erfindung betrifft ein Möbelteil, wie beispielsweise eine Schranktür oder eine Schrankwand nach den Merkmalen des Oberbegriffs des Anspruchs 1.

### Stand der Technik

Möbelteile der in Rede stehenden Art sind bekannt. So können Schranktüren oder Schrankwände einen umlaufenden Rahmen aufweisen, welcher Rahmen ein die durch den Rahmen aufgespannte Fläche überdeckendes Plattenteil haltert. Im Bereich der Rahmenecken können, den Eckbereich überbrückend, Eckverbinder vorgesehen sein, weiter insbesondere bei Ausgestaltung der Rahmenteile als Hohlprofile.

Aus der DE 10 2014 003 578 A1 sind mittels eines Eckverbinders zusammengehaltene Rahmenteile bekannt. Die Halterung des Eckverbinders in den Rahmenteilen ist kraftschlüssig, durch eine Spreizung von Klemmsegmenten des Eckverbinders in dem jeweiligen Rahmenteil erreicht. Hierzu wird zwischen glattflächig an Zusammenwirkungsflächen ausgebildete Klemmschenkel eines Eckverbinders eine Schraube gedreht, die zur Spreizung der Klemmschenkel und damit Klemmhalterung des Eckverbinders in einem Rahmenteil führt.

Aus der DE 19 89 176 U sind Rahmenteile, wie sie an einem Fensterrahmen zur Anwendung kommen, bekannt, die durch einen Eckverbinder zusammengehalten sind, wobei der Eckverbinder zwei miteinander fluchtende Durchgangsöffnungen aufweist, durch die von einer Rahmenaußenseite her eine Schraube mit Schraubenkopf gesteckt ist, die mit dem Schraubenkopf an einem Ende und einer Halterungsmutter an dem anderen Ende gegen den Rahmen verspannt ist.

Aus der US 2 221 005 A ist ein Schiebefenster bekannt, bei welchem einseitig auf den Fensterrahmen ein Rahmenteil zur Halterung einer weiteren Glasscheibe aufgeschraubt ist. Das Rahmenteil weist eine Aufnahmenut für die Glasscheibe auf.

Aus der US 2 816 632 A ist auch ein Fensterrahmen bekannt, der eine Glasscheibe in einer Aufnahmenut haltert. Vergleichbares ist auch aus der US 2020/032578 A1 bekannt.

### Zusammenfassung der Erfindung

Ausgehend von dem dargelegten Stand der Technik beschäftigt sich die Erfindung mit der Aufgabenstellung, ein Möbelteil der genannten Art anzugeben, dessen Rahmenteile im Hinblick auf darin gehalterte Plattenteile vorteilhaft ausgestaltet sind.

Diese Aufgabe beim Gegenstand des Anspruchs 1 gelöst, wobei darauf abgestellt ist, dass jedes Rahmenteil einstückig ausgebildet eine Rahmenseite bildet, dass das Rahmenteil als Hohlprofil ausgebildet ist, mit Bezug auf einen Querschnitt einen im Wesentlichen parallel zur durch den Rahmen aufgespannten Fläche ausgerichteten Langschenkel und einen im Querschnitt im Wesentlichen rechtwinklig hierzu verlaufenden und entsprechend senkrecht zu der Fläche ausgerichteten Kurzschenkel aufweist, unter Bildung eines materialverstärkten Eckbereichs, in welchem eine im Wesentlichen an die Querschnittsgestaltung eines Verbindungsschenkels des Eckverbinders angepasste Einsteckausnehmung belassen ist, dass in dem Rahmen zwei Plattenteile gehaltert sind, wobei ein erstes Plattenteil ein zweites Plattenteil flächenmäßig vollständig überdeckt und dass das Rahmenteil eine erste und eine zweite Aufnahmenut aufweist, zur Aufnahme des ersten und des zweiten Plattenteils.

Es liegt eine Fixierung der Rahmenteile über den Eckverbinder bevorzugt allein zufolge der vorgeschlagenen Schraubverbindung vor, darüber hinaus auch zusätzlich durch eine formschlüssige Aufnahme des Eckverbinders in den Einsteckausnehmungen der Rahmenteile. Die Anordnung und Ausrichtung des Eckverbinders relativ zu den zu verbindenden Rahmenteilen kann durch die Bohrung in dem jeweiligen Verbindungsschenkel und der Aufnahmebohrung im Rahmenteil vorgegeben sein. Entsprechend kann die Eckverbindung gegebenenfalls nur in einer möglichen Ausrichtung von Eckverbinder und Rahmenteilen zueinander ermöglicht sein, sodass sich eine eindeutige Montagestellung ergibt. Der Gewindeeingriff sichert unmittelbar die Schraube gegen den Eckverbinder und/oder das Rahmenteil. Bezüglich des jeweils anderen Teils, des Rahmenteils oder des Eckverbinders, ist ohne weiteres eine Formschlusssicherung erreicht, da es sich um eine an die Schraube angepasste Bohrung handelt. Das Rahmenteil wird nicht durch Spreiz- beziehungsweise Klemmkräfte belastet.

Die Aufnahmebohrung des Rahmenteils und/oder die Bohrung in einem der Verbindungsschenkel des Eckverbinders ist als Gewindebohrung ausgebildet. Bevorzugt ist diesbezüglich eine Ausgestaltung, bei welcher der Verbindungsschenkel eine Gewindebohrung aufweist und das Rahmenteil in der Verbindungsstellung zu der Gewindebohrung im Verbindungsschenkel fluchtend in Achsrichtung der Bohrung eine Durchgangsbohrung aufweist. Auch kann die Anordnung umgekehrt vorgesehen sein, sodass die Aufnahmebohrung des Rahmenteils als Gewindebohrung ausgebildet ist und die Bohrung im Verbindungsschenkel als Durchgangsbohrung.

Weiter alternativ kann auch eine Durchsteckverbindung unter Nutzung der Schraube gegeben sein, wobei die Schraube eine, eine Durchgangsbohrung aufweisende Wandung des Rahmenteils sowie eine als Durchgangsbohrung ausgebildete Bohrung des Verbindungsschenkels frei durchsetzt und in einen Gewindeeingriff zu einer Gewindebohrung in einem weiteren Halterungsschenkel des Rahmenteils eingreift.

Bedingt durch die hierdurch gegebenenfalls vorgegebene Montagestellung der Teile zueinander kann eine zumindest annähernd spannungsfreie Anlage der über den Eckverbinder verbundenen Rahmenteile aneinander erreicht werden.

Zufolge einer möglichen Ausbildung einer Mehrzahl von in Längsausrichtung eines Verbindungsschenkels beabstandet zueinander vorgesehener Bohrungen in dem Verbindungsschenkel und/oder Aufnahmebohrungen in zuordbaren Rahmenteil kann eine Anpassbarkeit der Verbindung an unterschiedliche Gegebenheiten erreicht werden.

Darüber hinaus erweist sich die vorgeschlagene Ausgestaltung hinsichtlich einer Montage, wie darüber hinaus aber auch bezüglich einer möglichen Demontage, von Vorteil. Die Verbindung kann in vorteilhafter Weise reversibel unter Nutzung eines üblichen Werkzeugs, beispielsweise Schraubwerkzeugs, sein.

Das Plattenteil kann in dem Rahmen lediglich formschlussgehaltert sein.

Das Plattenteil ist entsprechend bevorzugt nicht weiter, beispielsweise durch Verschraubung, Vernietung oder Verklebung, an oder in dem Rahmen befestigt. Vielmehr ist eine Halterung allein durch den gegebenen Formschluss erreicht. Dies bietet die Möglichkeit eines vereinfachten Austauschs des Plattenteils, beispielsweise bei Beschädigung oder bei einem gewünschten Wechsel des durch das Plattenteil gegebenen Dekors. Das Plattenteil kann bevorzugt beschädigungsfrei in den Rahmen eingesetzt und ebenso bevorzugt beschädigungsfrei auch wieder aus diesem herausgenommen werden.

Die nötige Stabilität des Möbelteils ist bevorzugt im Wesentlichen durch den Rahmen gegeben, welcher Rahmen selbsttragend ausgebildet sein kann.

Die Schraube zur Festlegung des Eckverbinders kann eine übliche, beispielsweise metrische oder zöllische Schraube sein, weiter beispielsweise eine sogenannte Senkkopfschraube oder Linsenkopfschraube. Bevorzugt wird diesbezüglich ein Gewindestift, auch als sogenannte Madenschraube bezeichnet, mit einer endseitigen Werkzeug-Einstecköffnung.

Die Einsteckausnehmung kann gesondert sein von einer Aufnahmenut des Rahmenteils zur Aufnahme des Plattenteils. Aufnahmenut und Einsteckausnehmung können dabei mit Bezug auf eine senkrecht zur Längserstreckung der Rahmenteile betrachteten Breite des Rahmenteils und/oder auf eine quer zur Längserstreckung betrachteten Tiefe im Wesentlichen in einer Nebeneinanderanordnung vorgesehen sein. Die Einsteckausnehmung ist erfindungsgemäß in Art eines Hohlprofils ausgebildet.

In dem Rahmen sind erfindungsgemäß zwei Plattenteile gehaltert, wobei ein erstes Plattenteil ein zweites Plattenteil flächenmäßig vollständig überdeckt.

Das Rahmenteil weist erfindungsgemäß eine erste und eine zweite Aufnahmenut auf, zur Aufnahme des ersten und des zweiten Plattenteils. Dabei können gemäß einer möglichen Ausführung gleiche erste und zweite Plattenteile vorgesehen sein, darüber hinaus alternativ, wie auch bevorzugt, beispielsweise hinsichtlich des verwendeten Plattenmaterials und/oder beispielsweise des Plattenaufbaus und/oder beispielsweise hinsichtlich der Oberflächengestaltung unterschiedliche Plattenteile.

Dabei können weiter die zwei Aufnahmenuten eindeutig dem jeweiligen Plattenteil zuordbar sein, beispielsweise zufolge Ausbildung unterschiedlich breiter Nuten, zur Aufnahme von entsprechend in der Breitenrichtung ausgebildeten unterschiedlichen Plattenteilen.

Durch die bevorzugt reversibel ausgebildete Eckverbindung ist in handhabungstechnisch günstiger Weise auch ein Austausch eines Plattenteils oder beider Plattenteile ermöglicht.

Darüber hinaus können mit Bezug auf eine Erstreckung einer durch den Rahmen aufgespannten Fläche die Aufnahmenuten hinsichtlich eines Nutgrundes, gesehen in ein Flächenerstreckung der Fläche, unterschiedliche Tiefen aufweisen. Entsprechend kann der durch die Rahmenteile zusammengesetzte Rahmen ausgebildet sein zur Aufnahme von zwei Plattenteilen mit unterschiedlich großen Flächenerstreckungen, weiter im Wesentlichen mit unterschiedlichen Breiten oder Höhen - mit Bezug auf die übliche Nutzungsstellung des Möbelteils.

Darüber hinaus ist zufolge der vorbeschriebenen Ausgestaltung der Aufnahmenuten eine kompakte Ausbildung der Rahmenteile ermöglicht. So kann die Einsteckausnehmung gemäß einer möglichen Ausgestaltung zumindest teilweise innerhalb einer senkrechten Projektionsfläche des Nutbodens der Aufnahmenut mit geringerer Tiefe vorgesehen sein.

Weiter kann die Einsteckausnehmung für den Eckverbinder gesondert von der einen beziehungsweise von beiden Aufnahmenuten ausgebildet sein, wobei die Einsteckausnehmung in dem Rahmenteil nur jeweils eine einem Ende des Rahmenteils zugeordnete Einstecköffnung aufweisen kann. Die Einsteckausnehmung kann weiter bei bevorzugter Ausgestaltung des Rahmenteils als strangextrudiertes Hohlprofilteil durchlaufend ausgebildet sein, sodass sich jeweils endseitig eine entsprechende Einstecköffnung für einen Verbindungsschenkel des Eckverbinders ergeben kann.

Mit Bezug auf einen Querschnitt durch die Einsteckausnehmung quer zur Längserstreckung des jeweiligen Rahmenteils, kann sich eine an eine Querschnittsfläche eines Verbindungsschenkels angepasste Öffnungsfläche ergeben, sodass sich bei eingestecktem Eckverbinder zwischen dem jeweiligen Verbindungsschenkel und der Einsteckausnehmung im Wesentlichen eine formschlüssige Verbindung ergeben kann.

Auf dem Nutgrund kann gemäß einer möglichen Ausgestaltung eine Dämpfungslage, insbesondere für das aufzunehmende beziehungsweise aufgenommene Plattenteil, angeordnet sein. Eine solche Dämpfungslage kann dafür vorgesehen sein, das Plattenteil von dem Rahmen und über diesen Rahmen von dem weiteren Möbel beispielsweise hinsichtlich Vibrationen oder Erschütterungen im Wesentlichen zu isolieren. Auch kann hierdurch eine im Wesentlichen bewegungsgehinderte Aufnahme des Plattenteils in der Nut erreicht sein.

So kann weiter die Dämpfungslage beispielsweise eine Lage aus einem thermoplastischen Elastomermaterial oder einem Gummimaterial sein. In weiterer Ausgestaltung kann es sich hierbei beispielsweise um eine eingelegte Rundschnur handeln, etwa eine Gummirundschnur oder eine Weichschaumstoff-Rundschnur.

In weiter bevorzugter Ausgestaltung sind beide Aufnahmenuten in ihrem Nutgrund mit einer solchen Dämpfungslage versehen, wobei weiter je nach Art des aufgenommenen Plattenteils die jeweilige Dämpfungslage hinsichtlich ihrer Ausgestaltung und/oder Einstellung an das Plattenteil angepasst sein kann.

In insbesondere herstellungstechnisch günstiger Weise kann das Rahmenteil ein Strangpressprofil sein, weiter bevorzugt ein Aluminium-Strangpressprofilteil. Darüber hinaus kann, wie auch bevorzugt, ein solches Strangpressprofilteil zur Bildung des Rahmenteils eine äußerlich aufgetragene Pulverbeschichtung aufweisen. Auch kann die Oberfläche des Strangpressprofilteils beziehungsweise des Rahmenteils eloxiert sein.

Auch der Eckverbinder kann aus einem metallischen Material, beispielsweise Aluminium, bestehen, alternativ, wie auch bezüglich der Rahmenteile möglich, aus einem Hartkunststoffmaterial.

Das Plattenteil kann aus einem steinartigen Werkstoff bestehen, so beispielsweise aus einem Keramikwerkstoff, einem Naturstein oder einem Quarz-Composite.

Auch kann das Plattenteil eine metallische Platte sein, beispielsweise eine auf Aluminium basierende Platte. Darüber hinaus kann es sich dabei auch um eine sogenannte Alu-Dibond-Platte handeln.

Darüber hinaus kann das Plattenteil auch eine (Hart-)Kunststoffplatte sein oder auch eine Furnier-Sperrholzplatte beziehungsweise Multiplex-Platte.

Die Rahmenteile des Rahmens sind bevorzugt zur Aufnahme von zwei Plattenteilen ausgebildet, weisen entsprechend zwei Aufnahmenute auf. Es kann, gemäß einer möglichen Ausgestaltung, auch bei derart ausgebildeten Rahmenteilen nur ein Plattenteil aufgenommen sein, insbesondere ein der Außenseite des Rahmens zugeordnetes Plattenteil. Bevorzugt ist diesbezüglich jedoch die Aufnahme von zwei Plattenteilen, wobei ein Plattenteil die Außenseite und ein Plattenteil die Innenseite des Möbelteils bildet.

So kann weiter, wie auch bevorzugt, das Plattenteil aus einem steinartigen Werkstoff die Außenseite des Möbels bilden und das metallische Plattenteil die Innenseite. Dies bietet sich beispielsweise an bei Ausgestaltung des steinartigen Werkstoffs aus einem Keramikwerkstoff, da die der Sichtseite abgewandte Rückseite einer solchen Keramikplatte oft wenig ansehnlich ist. Durch die innenseitige Überdeckung durch das beispielsweise metallische Plattenteil ist auch eine optisch positive Innenseitengestaltung erreicht. Dies kann weiter auch erreicht sein beispielsweise durch Anordnung von zwei Plattenteilen, die beide beispielsweise aus einem steinartigen Werkstoff bestehen, wobei diese so angeordnet sind, dass deren Rückseiten aufeinander zu weisen.

Darüber hinaus ist insbesondere bei einem Plattenteil aus einem steinartigen Werkstoff, beispielsweise Keramikwerkstoff, durch die Hinterlegung mit einem weiteren Plattenteil aus bevorzugt einem metallischen Werkstoff, wie Aluminium, eine flächige Abstützung des Plattenteils aus steinartigem Werkstoff erreichbar.

Bei einer Ausbildung des Möbelteils als Schranktür kann das Möbelteil ein in das Rahmenteil versenktes Scharnierteil aufweisen. Das Scharnierteil kann dabei beispielsweise in Art eines Topfscharniers ausgebildet sein. Neben einer üblichen Schraubverbindung des Scharniers mit dem Rahmen beziehungsweise dem Rahmenteil, kann über den versenkt in dem Rahmenteil aufgenommenen Topf des Scharniers zusätzlich eine Formschlussverbindung erreicht sein. Die Einsenkung in dem Rahmenteil ist dabei bevorzugt sowohl hinsichtlich der Tiefe als auch der quer hierzu betrachteten Flächenerstreckung an die Außenabmessung des Topfes angepasst.

Durch die bevorzugte versenkte Aufnahme des Scharniers im Rahmenteil kann eine entsprechende Vertiefung in dem einen Plattenteil oder in beiden Plattenteilen entfallen.

Dabei kann weiter gemäß einer möglichen Ausgestaltung das Scharnierteil randseitig in dem Rahmenteil in einer Aufnahmenut zur Aufnahme eines Plattenteils angeordnet sein. Die entsprechend vorgesehene Einsenkung in dem Rahmenteil kann entsprechend in der Aufnahmenut münden, gegebenenfalls sich vollständig in Richtung der Aufnahmenut öffnen. Die Aufnahmenut kann Teil der das Scharnier beziehungsweise den Scharniertopf aufnehmenden Einsenkung sein.

In bevorzugter Ausführung ist das Scharnierteil randseitig in dem Rahmenteil in der Aufnahmenut mit der geringsten Tiefe angeordnet. Diese Aufnahmenut dient bevorzugt zur Aufnahme des inneren Plattenteils.

### Kurze Beschreibung der Zeichnungen

Nachstehend ist die Erfindung anhand der beigefügten Zeichnung erläutert, die aber lediglich ein Ausführungsbeispiel darstellt. Die Zeichnung zeigt:
- Fig. 1: in perspektivischer Darstellung die Anordnung einer Mehrzahl von Möbeln mit als Schrankwände oder Schranktüren ausgebildeten Möbelteilen;

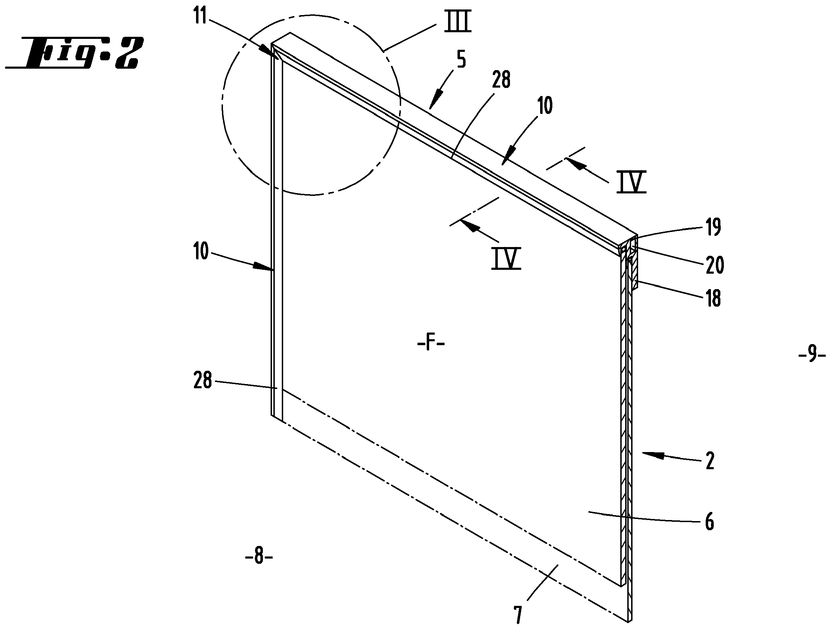

- Fig. 2: in perspektivischer Darstellung einen partiell geschnittenen Eckbereich eines Rahmens;
- Fig. 3: den Bereich III in Figur 2, jedoch in explosionsperspektivischer Darstellung;
- Fig. 4: den Schnitt gemäß der Linie IV-IV in Figur 2;
- Fig. 5: den Schnitt gemäß der Linie V-V in Figur 4;
- Fig. 6: die Herausvergrößerung des Bereiches VI in Figur 4;
- Fig. 7: in Ansicht einen Eckverbinder;
- Fig. 8: den Eckverbinder in perspektivischer Darstellung;
- Fig. 9: in einer perspektivischen Schnittdarstellung ein Rahmenteil;
- Fig. 10: das Rahmenteil in einer weiteren perspektivischen Schnittdarstellung;
- Fig. 11: das Rahmenteil in Schnittdarstellung bei in strichpunktierter Linienart angedeuteter Festlegung des durch das Rahmenteil gebildeten Rahmens und bei durch die Rahmenteile aufgenommenen Plattenteilen;
- Fig. 12: in perspektivischer Ausschnittdarstellung ein Möbelteil in Form einer Schranktür mit daran befestigten Scharnieren;
- Fig. 13: den Schnitt gemäß der Linie XIII- XIII in Figur 12;
- Fig. 14: den Schnitt gemäß der Linie XIV-XIV in Figur 13.

### Beschreibung der Ausführungsformen

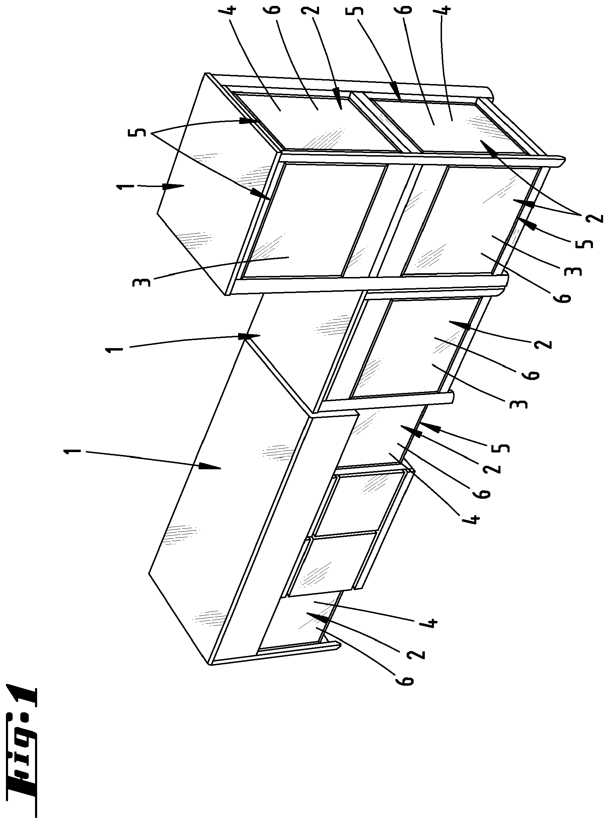

Dargestellt und beschrieben ist, zunächst mit Bezug zu der Darstellung in Figur 1, eine Anordnung von Möbeln 1, beispielsweise von Küchenmöbeln, weiter beispielsweise eine Anordnung von Outdoor-Küchenmöbeln 1.

Diese Möbel 1 weisen in einer üblichen Nutzungsstellung im Wesentlichen vertikal ausgerichtete Möbelteile 2, wie beispielsweise verschwenkbare oder verschiebbare Schranktüren 3 oder auch fest montierte Schrankwände 4, wie beispielsweise Seiten- oder Rückwände, auf, die, gemäß der in den weiteren zeichnerischen Darstellungen gezeigten Ausführungsform, im Wesentlichen einen Rahmen 5 aufweisen und mindestens ein die durch den Rahmen 5 aufgespannte Fläche F füllendes Plattenteil 6. Bevorzugt trägt der Rahmen 5 ein, die Außenseite 8 im Wesentlichen bildendes erstes Plattenteil 6 und ein die Innenseite 9 des Möbelteils 2 im Wesentlichen bildendes zweites Plattenteil 7.

Der Rahmen 5 setzt sich dabei weiter bevorzugt im Wesentlichen zusammen aus Rahmenteilen 10, wobei jedes Rahmenteil 10 weiter bevorzugt einstückig ausgebildet eine Rahmenseite bilden kann.

Weiter bevorzugt sind die Rahmenteile 10 insbesondere hinsichtlich ihres Querschnitts, betrachtet quer zu einer Längserstreckung L eines Rahmenteils 10, gleichgestaltet, weiter bevorzugt in Form eines Strangpressprofils aus beispielsweise Aluminium.

Bevorzugt sind vier solcher Rahmenteile 10 vorgesehen, wobei jeweils zwei parallel zueinander verlaufende Rahmenteile bevorzugt gleiche Längen aufweisen, sodass sich insgesamt durch den Rahmen 5 eine Rechteckfläche aufspannt. Es kann sich hierbei um eine quadratische Fläche F handeln oder auch um eine langgestreckt rechteckige Fläche F.

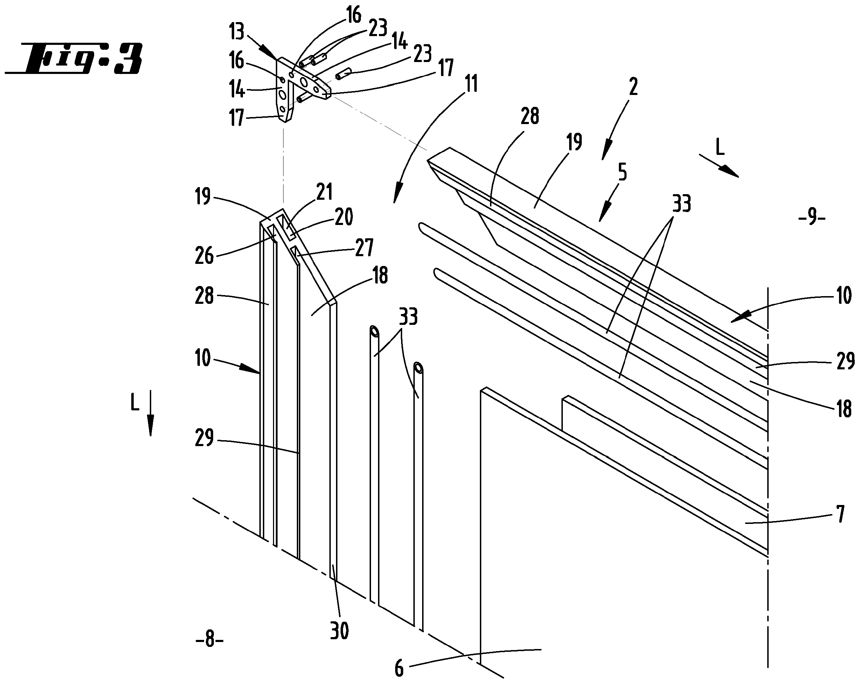

Entsprechend bevorzugt ergibt sich zwischen zwei in einem Eckbereich 11 aneinandergrenzender Rahmenteile 10 ein 90 Grad-Winkel. Weiter bevorzugt sind in diesem Bereich 11 die Rahmenteile 10 mit einem 45 Grad-Gehrungsschnitt versehen (siehe beispielsweise Figur 3).

Die in dem Eckbereich 11 zusammentreffenden Rahmenteile 10 sind jeweils über einen Eckverbinder 12 miteinander verbunden. Bei dem Eckverbinder 12 handelt es sich bevorzugt um ein in einem Grundriss, in welchem sich die Fläche F durch den Rahmen 5 aufgespannt, L-plattenförmiges Teil, mit zwei in einem Winkel von 90 Grad zueinander ausgerichteten Verbindungsschenkeln 14. Die beiden Verbindungsschenkel 14 sind bevorzugt bezüglich ihrer in Längsrichtung L der zu verbindenden Rahmenteile 10 betrachteten Länge, wie auch hinsichtlich ihrer quer hierzu betrachteten Querschnittsgestaltung, gleich ausgebildet.

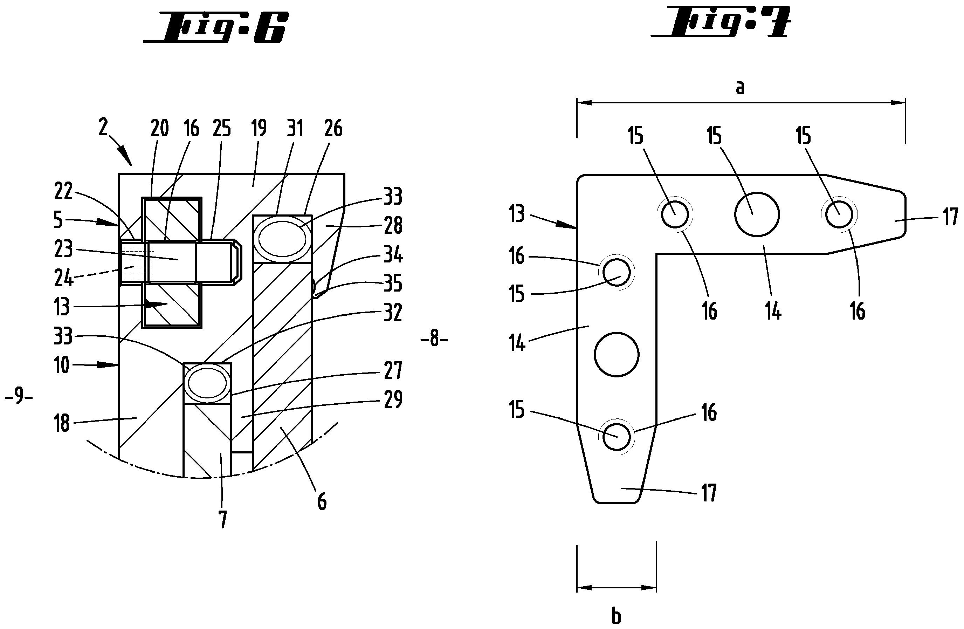

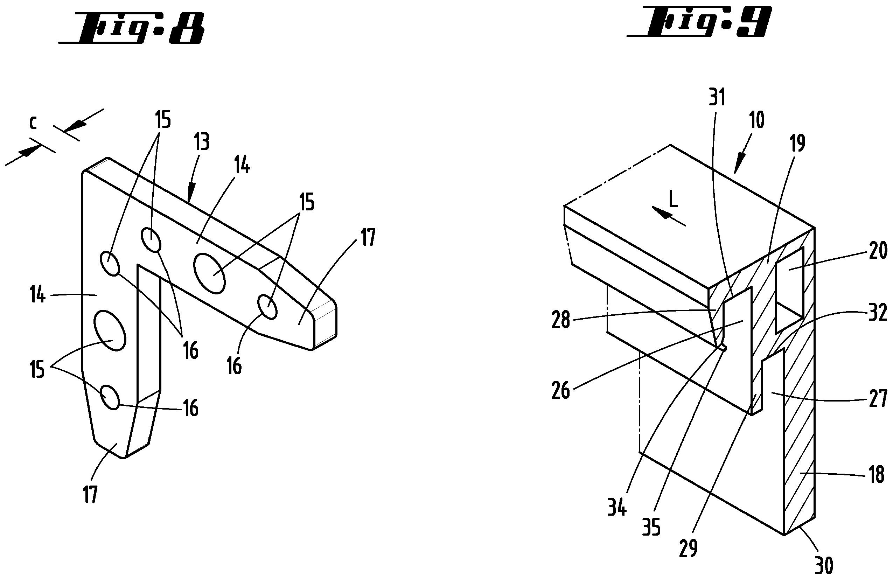

Jeder Verbindungsschenkel 14 kann, wie auch bevorzugt, mehrere den jeweiligen Verbindungsschenkel 14 quer zur Längsrichtung der Verbindungsschenkel 14 durchsetzende, gegebenenfalls gleichmäßig zueinander in Längsrichtung beabstandete Bohrungen 15 aufweisen, beispielsweise jeweils drei Bohrungen 15, wobei zwei äußere Bohrungen 15 eines Verbindungsschenkels 14 bevorzugt als Gewindebohrungen 16 ausgebildet sein können (vergleiche insbesondere Figuren 7 und 8). Die mittlere, bevorzugt durchmessergrößere Bohrung kann beispielsweise allein zur Materialeinsparung vorgesehen sein.

Die freien Enden 17 der Verbindungsschenkel 14 können sich konisch verjüngend ausgebildet sein.

Weiter können die Verbindungsschenkel 14 mit Bezug auf eine Querschnittdarstellung, beispielsweise gemäß Figur 6, eine in Durchsetzungsrichtung der Bohrungen 15 betrachtete Dicke c aufweisen, die etwa dem 0,4- bis 0,7-Fachen, weiter etwa dem 0,5-Fachen der senkrecht zur Längserstreckung der Verbindungsschenkel 14 betrachteten Breite b entsprechen kann.

Die Gesamtlänge a eines Verbindungsschenkels 14 kann dabei weiter etwa dem 3- bis 5-Fachen, weiter bevorzugt etwa dem 4-Fachen der vorbeschriebenen Breite b entsprechen.

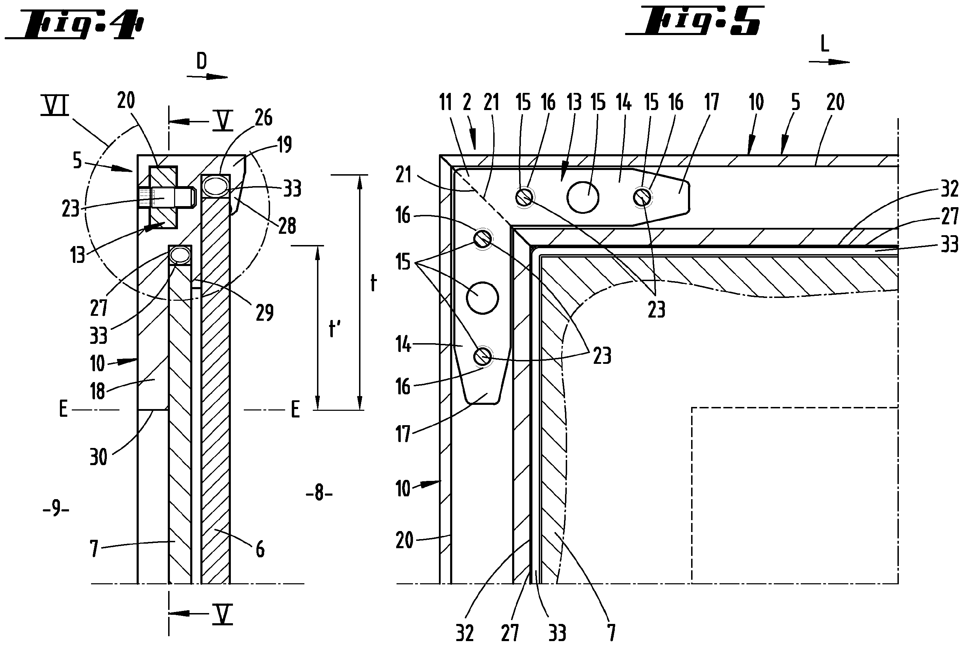

Jedes bevorzugt als Hohlprofilteil ausgebildete Rahmenteil 10 weist mit Bezug auf einen Querschnitt, beispielsweise dargestellt in Figur 4, einen in üblichem Nutzungszustand im Wesentlichen parallel zur durch den Rahmen 5 aufgespannten Fläche F ausgerichteten Langschenkel 18 und einen im Querschnitt im Wesentlichen rechtwinklig hierzu verlaufenden und entsprechend im üblichen Nutzungszustand senkrecht zu der Fläche F ausgerichteten Kurzschenkel 19 auf, unter Bildung eines materialverstärkten Eckbereichs, in welchem eine im Wesentlichen an die Querschnittsgestaltung eines Verbindungsschenkel 14 des Eckverbinders 13 angepasste Einsteckausnehmung 20 belassen ist.

Die Einsteckausnehmung 20 weist entsprechend bevorzugt einen im Wesentlichen im Querschnitt umlaufend geschlossenen Rechteckquerschnitt auf, wobei die Einsteckausnehmung 20 zufolge der bevorzugten Herstellung des Rahmenteils 10 als Strangpressprofilteil in Längsrichtung L durchlaufend gebildet ist und jeweils endseitig des Rahmenteils 10 im Bereich der bevorzugten Gehrungsausbildung eine Einstecköffnung 21 bildet (vergleiche Figur 3).

Bei in die jeweilige Einsteckausnehmung 20 der in dem Eckbereich 11 aufeinander zu weisenden Rahmenteile 10 eingesteckten Verbindungsschenkeln 14 des Eckverbinders 13 und bevorzugter deckungsgleicher Aneinanderlage der Rahmenteile 10 im Bereich ihrer Gehrungsflächen sind den Gewindebohrungen 16 der Verbindungsschenkel 14 in axialer Ausrichtung zur diesen Aufnahmebohrungen 22 in dem im Querschnitt im Wesentlichen parallel zu den Verbindungsschenkeln 14 verlaufenden Langschenkel 18 des Rahmenteils 10 vorgesehen, (vergleiche beispielsweise Figuren 4 und 6).

Durch diese Aufnahmebohrungen 22 werden zur Festlegung und Fixierung der Eckausbildung Schrauben 23, bevorzugt in Art von Gewindestiften, eingedreht, welche Schrauben 23 in die Gewindebohrungen 16 des Eckverbinders 13 eingreifend beziehungsweise diese durchgreifend in den Aufnahmebohrungen 22 des zugeordneten Rahmenteils 10 aufgenommen sind.

Wie insbesondere aus der Darstellung in Figur 6 zu erkennen, kann das dem nach außen gewandten und hier in üblicher Weise eine Werkzeugaufnahme 24 aufweisenden Ende abgewandte Ende der Schraube 23 in einer weiteren Aufnahmebohrung 25, beispielsweise Sackbohrung, im materialverdickten Eckbereich des Rahmenteils 10 aufgenommen sein.

Es ist so eine stabile und reversible Befestigung der Rahmenteile 10 gegeneinander geschaffen, zur Bildung des Rahmens 5 insgesamt.

Zur Halterung der beiden Plattenteile 6 und 7 weist jedes Rahmenteil 10 zwei Aufnahmenuten 26 und 27 auf. Dabei ist das die Innenseite 9 bevorzugt bildende zweite Plattenteil 7 aufnehmende Aufnahmenut 27 bevorzugt allein zufolge einer entsprechenden nutartigen Ausnehmung aus dem den Langschenkel 18 mit dem Kurzschenkel 19 des Rahmenteils 10 verbindenden materialverdickten Eckbereich gebildet, während die weitere Aufnahmenut 26 zur Aufnahme des bevorzugt die Außenseite 8 bildenden ersten Plattenteils 6 in einem Querschnitt gemäß Figur 4 beziehungsweise 6 zweiseitig begrenzt ist durch den vorbeschriebenen materialverdickten Eckbereich und den Kurzschenkel 19, wobei die dritte, äußere Begrenzung der Aufnahmenuten 26 gebildet ist durch einen unterseitig an dem Kurzschenkel 19 angeformten Übergreifschenkel 28.

Entsprechend der Ausrichtung der vorbeschriebenen Dicke c des Eckverbinders 12, beziehungsweise dessen Verbindungsschenkels 14, ergibt sich auch bezüglich des Rahmenteils 10 im Querschnitt gemäß Figur 4 eine Dickenrichtung D. In dieser Dickenrichtung D ergibt sich rahmenseitig eine Mehrlagigkeit, wobei ausgehend von der Innenseite 9 zunächst der Langschenkel 18 des Rahmenteils 10 vorgesehen ist, an welchem sich an dessen in Richtung der Außenseite 8 gerichteten Fläche das zweite Plattenteil 7 gegebenenfalls unmittelbar anlehnt. Das weitere erste Plattenteil 6 hingegen kann gegenüber der zugewandten Außenfläche des zweiten Plattenteils 7 distanziert angeordnet sein, insbesondere zufolge Ausbildung eines Distanzsteges 29 zwischen den Aufnahmenuten 26 und 27, der einerseits die außenseitige Begrenzung der inneren Aufnahmenut 27 bildet und andererseits die innere Begrenzung der äußeren Aufnahmenut 26 (vergleiche Figur 6).

Der Distanzsteg 29 kann in Dickenrichtung D betrachtet eine Dicke aufweisen, die etwa dem 0,25- bis 0,5-Fachen, weiter etwa dem 0,3-Fachen der in selber Richtung betrachteten Dicke des Langschenkels 18 entsprechen kann. Durch die Dicke des Distanzsteges 29 ergibt sich das Distanzmaß der Plattenteile 6 und 7 zueinander.

Ausgehend von einer durch die Fläche F der Innenseite 9 begrenzenden Randkante 30 des Langschenkels 18 definierten Ebene E, die weiter bevorzugt senkrecht ausgerichtet ist zur Flächenerstreckung der Plattenteile 6 und 7, ergeben sich unterschiedliche Tiefen t und t' der Aufnahmenuten 26 und 27. So kann die Tiefe t' der inneren Aufnahmenut 27 etwa der Hälfte bis drei Viertel, weiter etwa zwei Drittel der in selber Richtung betrachteten Tiefe t der äußeren Aufnahmenut 26 entsprechen.

Die Aufnahmenuten 26 und 27 können entsprechend zur Aufnahme von Plattenteilen 6 und 7 mit unterschiedlichen Flächenerstreckung dienen, sodass weiter in der üblichen Nutzungsstellung das innere Plattenteil 7 mit Bezug auf eine senkrecht zur Flächenerstreckung betrachtete Projektion vollständig von dem äußeren Plattenteil 6 überdeckt sein kann.

Wie weiter aus den Darstellungen in den Figuren 4 und 6 insbesondere zu erkennen, können die Plattenteile 6 und 7 unterschiedliche Dicken aufweisen, weiter bevorzugt angepasst an die in Dickenrichtung D betrachtete Weite der jeweiligen Aufnahmenut 26, 27.

Weiter können die Plattenteile 6 und 7 in den Aufnahmenuten 26 und 27 ohne weitere Befestigung allein steck- und/oder klemmgehaltert sein.

Wie weiter dargestellt, kann auf dem jeweiligen Nutgrund 31 beziehungsweise 32 der Aufnahmenut 26, 27 eine Dämpfungslage 33, beispielsweise in Form einer Rundschnur, weiter beispielsweise Gummirundschnur, angeordnet sein. Diese Dämpfungslage 33 erstreckt sich mit Bezug auf einen Querschnitt innerhalb der Aufnahmenut 26 beziehungsweise 27 zwischen dem Nutgrund 31 beziehungsweise 32 und der zugewandten Schmalrandfläche des in der Nut aufgenommenen Plattenteils 6, 7. Zufolge der bevorzugt elastischen Eigenschaften der Dämpfungslage 33 kann so eine abgefederte Aufnahme der Plattenteile 6 und 7 in den Aufnahmenuten 26 und 27 erreicht sein.

Die Dämpfungslage 33 erstreckt sich bevorzugt über den gesamten Umfang des jeweiligen Plattenteils 6, 7, wie auch jedes Plattenteil 6, 7 bevorzugt über den gesamten Umfang in der jeweiligen Aufnahmenut 26, 27 des zusammengesetzten Rahmens 5 aufgenommen sein kann.

Der gegenüber dem Langschenkel 18 vergleichsweise kurze, im Wesentlichen parallel zum Langschenkel 18 verlaufende Übergreifschenkel 28 bildet in der üblichen Nutzungsstellung das der Außenseite 8 zugewandte und so von außen sichtbare Rahmenteil, wobei die der Außenseite zugewandte Schenkelfläche mit Bezug auf einen Querschnitt gemäß Figur 6 bevorzugt in einem spitzen Winkel zu einer Senkrechten zum Kurzschenkel 19 in Richtung auf die nach außen weisende Oberfläche des ersten Plattenteils 6 verläuft. Im Bereich des freien Endes des Übergreifschenkels 28 kann eine durch einen innenseitigen Hinterschnitt 34 freigestellte Anlagenase 35 ausgeformt sein. Diese kann geeignet sein zur zumindest annähernd dichtenden Anlage an die zugewandte Außen-Oberfläche des ersten Plattenteils 6.

Die in Tiefenrichtung t beziehungsweise t' der Aufnahmenuten 26 und 27 betrachtete Länge des Übergreifschenkels 28, ausgehend von einer freien Außenfläche des Kurzschenkels 19, kann etwa einem Viertel bis einem Drittel der in selber Richtung betrachteten Länge des Langschenkels 18 entsprechen.

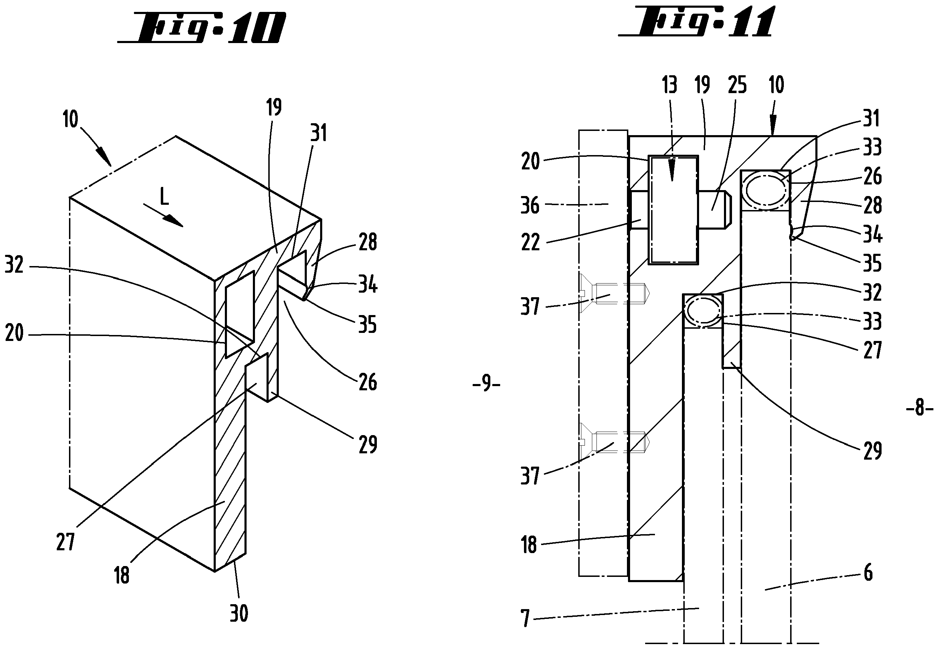

Weiter kann insbesondere der Langschenkel 18 einen Befestigungsbereich zur Festlegung des Rahmens 5 an dem Möbel 1 anbieten, so kann beispielsweise in diesem Bereich eine Verschraubung mit einem Rahmenteil 36 des Möbels 1, wie dies beispielsweise in Figur 11 schematisch dargestellt ist, ermöglicht sein. Die für diese Schraubverbindung vorgesehenen Schrauben 37 können in entsprechende Gewindebohrungen im Bereich des Langschenkels 18 eingreifen oder, bei Ausbildung der Schrauben 37 als selbstschneidende Schrauben, in den Langschenkel 18 eingetrieben sein.

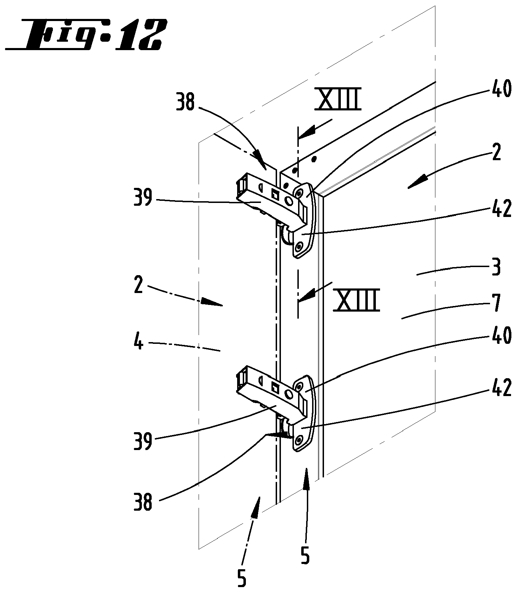

Weiter kann im Bereich des Langschenkels 18 bei Ausbildung des Möbelteils 2 als Schranktür 3 auch in gleicher Weise beispielsweise ein Scharnier 38 oder dergleichen befestigt, insbesondere schraubbefestigt sein (vergleiche Figuren 12 bis 14).

Das Scharnier 3 kann beispielsweise, wie auch dargestellt, als sogenanntes Topfscharnier ausgebildet sein, mit einem ersten Scharnierschenkel 39 und einem zweiten Scharnierschenkel 40.

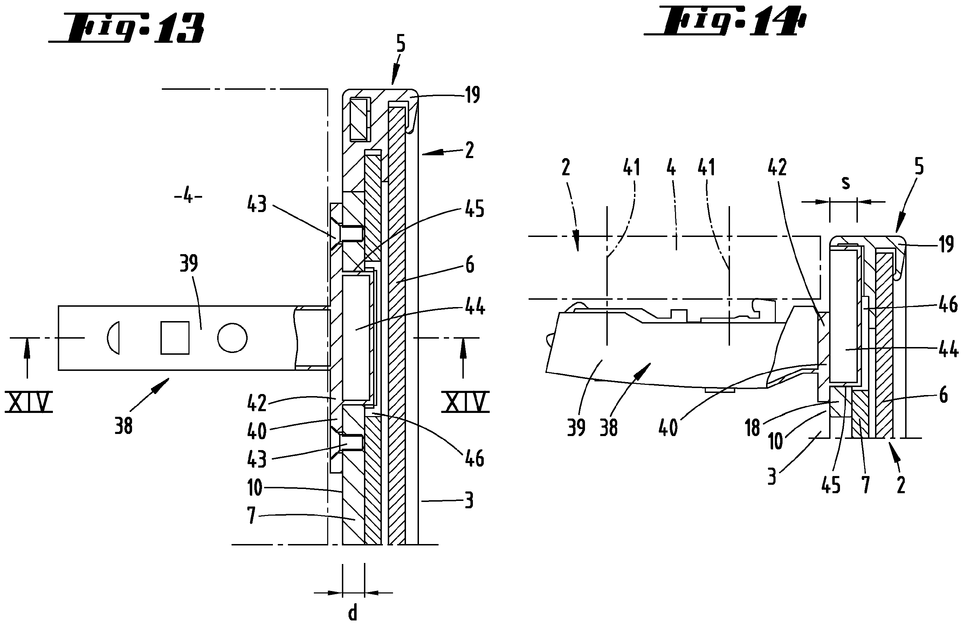

Der erste Scharnierschenkel 39 kann in üblicher Weise wandungsinnenseitig an einer Schrankwand 4, insbesondere Schrank-Seitenwand, schraubbefestigt sein. Die diesbezügliche Verschraubung, die in Figur 14 nur schematisch durch die strichpunktierten Linien 41 dargestellt ist, ist bevorzugt im Bereich des randseitig angeordneten Rahmenteils 10 dieser Schrankwand 4 vorgesehen, weiter insbesondere im Bereich des im üblichen Nutzungszustand vertikal verlaufenden Langschenkels 18.

Der zweite, der Schranktür 3 zugeordnete Scharnierschenkel 40 dient zur Festlegung des Scharniers 3 an dem im üblichen Nutzungszustand vertikal verlaufenden Rahmenteil 10, insbesondere im Bereich des Langschenkels 18. Der zweite Scharnierschenkel 40 weist hierzu in dem dargestellten Ausführungsbeispiel eine Befestigungsplatte 42, zur Abstützung auf der Oberfläche des Langschenkels 18 und zur Schraubbefestigung mittels Schrauben 43, und ein topfförmiges Scharnierteil 44 auf.

Das topfförmige Scharnierteil 44 ist teilweise überdeckt durch die Befestigungsplatte 42 und weist einen im Wesentlichen kreisförmigen Grundriss auf. Die senkrecht zur Erstreckung der Befestigungsplatte 42 betrachtete Tiefe s des Scharnierteils 44 kann dabei gleich oder größer gewählt sein als die in selber Richtung gemessene Dicke d des Langschenkels 18, in welchem zum Einsatz des Scharnierteils 44 eine umfangsangepasste, bohrungsartige Ausnehmung 45 vorgesehen ist (vergleiche Figur 13 und 14).

So kann bei entsprechender Dicke d des Langschenkels 18 das topfförmige Scharnierteil 44 vollständig im Querschnitt des Langschenkels 44 aufgenommen sein.

Um eine geringere Gesamtdicke des Rahmens 5 zu erhalten, kann bei angepasster geringer Dicke d des Langschenkels 44 das topfförmige Scharnierteil 44 die vorgesehene Ausnehmung 45 durchsetzend bis in den Bereich einer Aufnahmenut, insbesondere der inneren Aufnahmenut 27 mit der geringeren Tiefe t' greifen, so dass das Scharnierteil 44 in diesem Fall zumindest teilweise in dieser Aufnahmenut 27 angeordnet ist.

Das in der Aufnahmenut 27 aufgenommene Plattenteil 7 kann, wie in Figur 13 angedeutet, eine gegebenenfalls randoffene Ausnehmung 46 aufweisen, in die das topfförmige Scharnierteil 44 eintauchen kann.

**Liste der Bezugszeichen**

| | | | |
|---|---|---|---|
| 1 | Möbel | 29 | Distanzsteg |
| 2 | Möbelteil | 30 | Randkante |
| 3 | Schranktür | 31 | Nutgrund |
| 4 | Schrankwand | 32 | Nutgrund |
| 5 | Rahmen | 33 | Dämpfungslage |
| 6 | erstes Plattenteil | 34 | Hinterschnitt |
| 7 | zweites Plattenteil | 35 | Anlagenase |
| 8 | Außenseite | 36 | Rahmenteil |
| 9 | Innenseite | 37 | Schraube |
| 10 | Rahmenteil | 38 | Scharnier |
| 11 | Eckbereich | 39 | erster Scharnierschenkel |
| 12 | --- | 40 | zweiter Scharnierschenkel |
| 13 | Eckverbinder | 41 | Verschraubung |
| 14 | Verbindungsschenkel | 42 | Befestigungsplatte |
| 15 | Bohrung | 43 | Schraube |
| 16 | Gewindebohrung | 44 | Scharnierteil |
| 17 | Ende | 45 | Ausnehmung |
| 18 | Langschenkel | 46 | Ausnehmung |
| 19 | Kurzschenkel | | |
| 20 | Einsteckausnehmung | | |
| 21 | Einstecköffnung | | |
| 22 | Aufnahmebohrung | a | Länge |
| 23 | Schraube | b | Breite |
| 24 | Werkzeugaufnahme | c | Dicke |
| 25 | Aufnahmebohrung | d | Dicke |
| 26 | Aufnahmenut | s | Tiefe |
| 27 | Aufnahmenut | t | Tiefe |
| 28 | Übergreifschenkel | t' | Tiefe |
| D | Dickenrichtung | | |
| E | Ebene | | |
| F | Fläche | | |
| L | Längsrichtung | | |

## Patentansprüche

1. Möbelteil (2), wie beispielsweise eine Schranktür (3) oder eine Schrankwand (4), mit einem Rahmen (5), wobei der Rahmen (5) aus Rahmenteilen (10) zusammengesetzt ist und zwei Rahmenteile (10) über einen, zwei Verbindungschenkel (14) aufweisenden Eckverbinder (13) miteinander durch eine Schraubverbindung befestigt sind, wobei weiter der Rahmen (5) ein Plattenteil (6, 7) haltert und ein Rahmenteil (10) eine Einsteckausnehmung (20) für den Eckverbinder (13) aufweist, wobei weiter jeder Verbindungsschenkel (14) eine Bohrung (15) zur Aufnahme einer Schraube (23) aufweist und die Schraube (23) durch eine Aufnahme in einer fluchtenden Aufnahmebohrung (22) des Rahmenteils (10) den Eckverbinder (13) an dem Rahmenteil (10) sichert, wobei die Aufnahmebohrung (22) und/oder die Bohrung (15) eine im Gewindeeingriff mit der Schraube (23) stehende Gewindebohrung ist, wobei jedes Rahmenteil (10) einstückig ausgebildet eine Rahmenseite bildet, wobei jedes Rahmenteil (10) mit Bezug auf einen Querschnitt einen im Wesentlichen parallel zur durch den Rahmen aufgespannten Fläche (F) ausgerichteten Langschenkel (18) und einen im Querschnitt im Wesentlichen rechtwinklig hierzu verlaufenden und entsprechend senkrecht zu der Fläche (F) ausgerichteten Kurzschenkel (19) aufweist, unter Bildung eines materialverstärkten Eckbereichs, in welchem eine im Wesentlichen an die Querschnittsgestaltung eines Verbindungsschenkels (14) des Eckverbinders (13) angepasste Einsteckausnehmung (20) belassen ist, wobei in dem Rahmen (5) zwei Plattenteile (6, 7) gehaltert sind, wobei ein erstes Plattenteil (6) ein zweites Plattenteil (7) flächenmäßig vollständig überdeckt und wobei das Rahmenteil (10) eine erste und eine zweite Aufnahmenut (26, 27) aufweist, zur Aufnahme des ersten und des zweiten Plattenteils (6, 7), **dadurch gekennzeichnet**, das jedes Rahmenteil (10) als Hohlprofil ausgebildet ist.

2. Möbelteil nach Anspruch 1, **dadurch gekennzeichnet, dass** die Schraube (23) ein Gewindestift ist.

3. Möbelteil nach einem der vorhergehenden Ansprüche, **dadurch gekennzeichnet, dass** die Einsteckausnehmung (20) gesondert ist von den Aufnahmenuten (26, 27) der Rahmenteile (10) zur Aufnahme der Plattenteils (6, 7).

4. Möbelteil nach einem der vorhergehenden Ansprüche, **dadurch gekennzeichnet, dass** mit Bezug auf eine Erstreckung einer durch den Rahmen (5) aufgespannten Fläche (F) die Aufnahmenuten (26, 27) hinsichtlich eines Nutgrundes (31, 32), gesehen in einer Flächenerstreckung der Fläche (F), unterschiedliche Tiefen (t, t') aufweisen.

5. Möbelteil nach einem der vorhergehenden Ansprüche, **dadurch gekennzeichnet, dass** die Einsteckausnehmung (20) für den Eckverbinder (13) gesondert von den Aufnahmenuten (26, 27) ausgebildet ist und in dem Rahmenteil (10) nur jeweils eine einem Ende des Rahmenteils (10) zugeordnete Einstecköffnung (21) vorgesehen ist.

6. Möbelteil nach einem der vorhergehenden Ansprüche, **dadurch gekennzeichnet, dass** das Rahmenteil ein Strangpressprofil ist.

7. Möbelteil nach einem der Ansprüche 4 bis 6, **dadurch gekennzeichnet, dass** auf dem Nutgrund (31, 32) eine Dämpfungslage (33) angeordnet ist.

8. Möbelteil nach Anspruch 7, **dadurch gekennzeichnet, dass** die Dämpfungslage (33) eine Lage aus einem thermoplastischen Elastomermaterial oder einem Gummimaterial ist.

9. Möbelteil nach einem der vorhergehenden Ansprüche, **dadurch gekennzeichnet, dass** eines der Plattenteile (6, 7) aus einem steinartigen Werkstoff besteht.

10. Möbelteil nach einem der vorhergehenden Ansprüche, **dadurch gekennzeichnet, dass** eines der Plattenteile (6,7) eine metallische Platte ist, beispielsweise eine auf Aluminium basierende Platte.

11. Möbelteil nach den Ansprüchen 9 oder 10, **dadurch gekennzeichnet, dass** das erste Plattenteil (6) aus einem steinartigen Werkstoff besteht und eine Außenseite (8) des Möbelteils (2) bildet und das zweite Plattenteil (7) ein metallisches Plattenteil (7) ist und eine Innenseite (9) bildet.

12. Möbelteil nach einem der vorhergehenden Ansprüche, **dadurch gekennzeichnet, dass** das Möbelteil (2) bei einer Ausbildung als Schranktür (3) ein in das Rahmenteil (10) versenktes Scharnierteil (44) aufweist.

13. Möbelteil nach Anspruch 12, **dadurch gekennzeichnet, dass** das Scharnierteil (44) randseitig in dem Rahmenteil (10) in einer Aufnahmenut (26, 27) zur Aufnahme eines Plattenteils (6, 7) angeordnet ist.

14. Möbelteil nach Anspruch 13, **dadurch gekennzeichnet, dass** das Scharnierteil (44) randseitig in dem Rahmenteil (10) in der Aufnahmenut (27) mit der geringsten Tiefe (t') angeordnet ist.

## Claims

1. Furniture part (2), such as a cabinet door (3) or a cabinet wall (4), with a frame (5), wherein the frame (5) is composed of frame parts (10) and two frame parts (10) are fastened to one another by a screw connection via a corner connector (13) having two connecting legs (14), wherein furthermore the frame (5) holds a panel part (6, 7) and a frame part (10) having an insertion recess (20) for the corner connector (13), each connecting leg (14) further having a bore (15) for receiving a screw (23) and the screw (23) securing the corner connector (13) to the frame part (10) by means of a receptacle in an aligned receiving bore (22) of the frame part (10), wherein the receiving bore (22) and/or the bore (15) is a threaded bore in threaded engagement with the screw (23), wherein each frame part (10) is integrally formed to form a frame side, wherein each frame part (10) has, with respect to a cross-section, a long leg (18) oriented substantially parallel to the surface (F) spanned by the frame and a short leg (19) extending in cross-section substantially at right angles thereto and correspondingly oriented perpendicular to the surface (F), forming a material-reinforced corner region, in which an insertion recess (20) substantially adapted to the cross-sectional design of a connecting limb (14) of the corner connector (13) is left, two panel parts (6, 7) being held in the frame (5), wherein a first panel part (6) completely covers a second panel part (7) in terms of area and wherein the frame part (10) has a first and a second receiving groove (26, 27) for receiving the first and the second panel part (6, 7), **characterized in that** each frame part (10) is designed as a hollow profile.

2. Furniture part according to claim 1, **characterized in that** the screw (23) is a set screw.

3. Furniture part according to one of the preceding claims, **characterized in that** the insertion recess (20) is separate from the receiving grooves (26, 27) of the frame parts (10) for receiving the panel part (6, 7).

4. Furniture part according to one of the preceding claims, **characterized in that**, with respect to an extension of a surface (F) spanned by the frame (5), the receiving grooves (26, 27) have different depths (t, t') with respect to a groove base (31, 32), as seen in a surface extension of the surface (F).

5. Furniture part according to one of the preceding claims, **characterized in that** the insertion recess (20) for the corner connector (13) is formed separately from the receiving grooves (26, 27) and only one insertion opening (21) associated with each end of the frame part (10) is provided in the frame part (10).

6. Furniture part according to one of the preceding claims, **characterized in that** the frame part is an extruded profile.

7. Furniture part according to one of claims 4 to 6, **characterized in that** a damping layer (33) is arranged on the groove base (31, 32).

8. Furniture part according to claim 7, **characterized in that** the damping layer (33) is a layer of a thermoplastic elastomer material or a rubber material.

9. Furniture part according to one of the preceding claims, **characterized in that** one of the panel parts (6, 7) consists of a stone-like material.

10. Furniture part according to one of the preceding claims, **characterized in that** one of the panel parts (6, 7) is a metallic panel, for example an aluminum-based panel.

11. Furniture part according to claims 9 or 10, **characterized in that** the first panel part (6) is made of a stone-like material and forms an outer side (8) of the furniture part (2) and the second panel part (7) is a metallic panel part (7) and forms an inner side (9).

12. Furniture part according to one of the preceding claims, **characterized in that** the furniture part (2), when designed as a cabinet door (3), has a hinge part (44) recessed into the frame part (10).

13. Furniture part according to claim 12, **characterized in that** the hinge part (44) is arranged at the edge in the frame part (10) in a receiving groove (26, 27) for receiving a panel part (6, 7).

14. Furniture part according to claim 13, **characterized in that** the hinge part (44) is arranged on the edge side in the frame part (10) in the receiving groove (27) with the smallest depth (t').

## Revendications

1. Élément de meuble (2), comme par exemple une porte d'armoire (3) ou une paroi d'armoire (4), avec un cadre (5), le cadre (5) étant composé de parties de cadre (10) et deux parties de cadre (10) étant fixées l'une à l'autre par un assemblage à vis par l'intermédiaire d'un connecteur d'angle (13) présentant deux branches d'assemblage (14), le cadre (5) comportant en outre une partie de panneau (6, 7) et une partie de cadre (10) présente un évidement d'insertion (20) pour le connecteur d'angle (13), chaque branche de liaison (14) présentant en outre un perçage (15) destiné à recevoir une vis (23) et la vis (23) bloquant le connecteur d'angle (13) sur la partie de cadre (10) par un logement dans un perçage de réception (22) aligné de la partie de cadre (10), l'alésage de réception (22) et/ou l'alésage (15) étant un alésage taraudé en prise avec la vis (23), chaque partie de cadre (10) formant d'un seul tenant un côté de cadre, chaque partie de cadre (10) présentant, par rapport à une section transversale, une branche longue (18) orientée sensiblement parallèlement à la surface (F) tendue par le cadre et une branche courte (19) s'étendant en section transversale sensiblement perpendiculairement à celle-ci et orientée de manière correspondante perpendiculairement à la surface (F), en formant une zone d'angle renforcée par un matériau, dans laquelle est laissé un évidement d'insertion (20) adapté pour l'essentiel à la configuration de la section transversale d'une branche de liaison (14) du connecteur d'angle (13), deux parties de panneau (6, 7) étant maintenues dans le cadre (5), une première partie de panneau (6) recouvrant entièrement une deuxième partie de panneau (7) sur toute sa surface et la partie de cadre (10) présentant une première et une deuxième rainure de réception (26, 27) pour recevoir la première et la deuxième partie de panneau (6, 7), **caractérisé en ce que** chaque partie de cadre (10) est conçue comme un profilé creux.

2. Élément de meuble selon la revendication 1, **caractérisé en ce que** la vis (23) est une vis sans tête.

3. Élément de meuble selon l'une des revendications précédentes, **caractérisé en ce que** l'évidement d'insertion (20) est séparé des rainures de réception (26, 27) des éléments de cadre (10) pour recevoir les éléments de panneau (6, 7).

4. Élément de meuble selon l'une des revendications précédentes, **caractérisée en ce que**, par rapport à une extension d'une surface (F) définie par le cadre (5), les rainures de réception (26, 27) présentent des profondeurs différentes (t, t') par rapport à un fond de rainure (31, 32), vu dans une extension de surface de la surface (F).

5. Élément de meuble selon l'une des revendications précédentes, **caractérisé en ce que** l'évidement d'insertion (20) pour le connecteur d'angle (13) est réalisé séparément des rainures de réception (26, 27) et **en ce qu'**il n'est prévu dans l'élément de cadre (10) qu'une ouverture d'insertion (21) associée à une extrémité de l'élément de cadre (10).

6. Élément de meuble selon l'une des revendications précédentes, **caractérisé en ce que** l'élément de cadre est un profilé extrudé.

7. Élément de meuble selon l'une des revendications 4 à 6, **caractérisé en ce qu'**une couche d'amortissement (33) est disposée sur le fond de la rainure (31, 32).

8. Élément de meuble selon la revendication 7, **caractérisé en ce que** la couche d'amortissement (33) est une couche d'un matériau élastomère thermoplastique ou d'un matériau en caoutchouc.

9. Élément de meuble selon l'une des revendications précédentes, **caractérisé en ce que** l'une des parties de panneau (6, 7) est constituée d'un matériau de type pierre.

10. Élément de meuble selon l'une des revendications précédentes, **caractérisé en ce que** l'une des parties de panneau (6, 7) est un panneau métallique, par exemple un panneau à base d'aluminium.

11. Elément de meuble selon les revendications 9 ou 10, **caractérisé en ce que** la première partie de panneau (6) est constituée d'un matériau de type pierre et forme un côté extérieur (8) de l'élément de meuble (2) et la deuxième partie de panneau (7) est une partie de panneau métallique (7) et forme un côté intérieur (9).

12. Élément de meuble selon l'une des revendications précédentes, **caractérisé en ce que** l'élément de meuble (2), lorsqu'il est conçu comme une porte d'armoire (3), présente une partie de charnière (44) encastrée dans l'élément de cadre (10).

13. Élément de meuble selon la revendication 12, **caractérisée en ce que** la partie de charnière (44) est disposée sur le bord dans la partie de cadre (10) dans une rainure de réception (26, 27) pour recevoir une partie de panneau (6, 7).

14. Élément de meuble selon la revendication 13, **caractérisée en ce que** la partie de charnière (44) est disposée du côté du bord dans la partie de cadre (10) dans la rainure de réception (27) ayant la plus faible profondeur (t').
